# EUROPEAN PATENT APPLICATION

(11) **EP 4 230 677 A1**
(43) Date of publication of application: **23.08.2023**
(21) Application number: 21879790.0
(22) Date of filing: 10.09.2021
(51) Int. Cl.: C08G 59/50, C09J 11/06, C09D 163/00, C09J 163/00

(54) **EPOXY RESIN CURING AGENT, EPOXY RESIN COMPOSITION, PAINT, AND ADHESIVE**

(30) Priority: 15.10.2020 JP 2020173743
(71) Applicant: MITSUBISHI GAS CHEMICAL COMPANY, INC., Chiyoda-ku Tokyo 100-8324 (JP)
(72) Inventor: HANAOKA, Takuma, Hiratsuka-shi, Kanagawa 254-0016 (JP); KOUNO, Kazuki, Hiratsuka-shi, Kanagawa 254-0016 (JP); OHNO, Yuma, Hiratsuka-shi, Kanagawa 254-0016 (JP)
(74) Representative: Hoffmann Eitle
(86) International application number: PCT/JP2021/033234
(87) International publication number: WO 2022/080048

(57) **Abstract**

Provided are an epoxy resin curing agent containing an amine composition or a modified product thereof, wherein the amine composition contains metaxylylenediamine and paraxylylenediamine at a mass ratio of 99/1 to 51/49, an epoxy resin composition, and a paint and an adhesive containing these.

## Description

### Technical Field

The present invention relates an epoxy resin curing agent, an epoxy resin composition, a paint and an adhesive.

### Background Art

Xylylenediamine is a compound useful as a raw material for polyamide resin, an epoxy resin curing agent, and a raw material for isocyanate compound, and the like. However, it is known that xylylenediamine is apt to be changed in quality due to light, heat, oxygen, or the like and causes degradation such as coloration and odorization via storage.

Thus, for example, Patent Literature 1 discloses, as xylylenediamine excellent in storage stability and causing no quality degradation such as coloration even stored for a long period, encased solid xylylenediamine obtained by filling a container with liquid xylylenediamine having a hue of 20 or less as APHA and solidifying the xylylenediamine in the container, wherein the xylylenediamine melted into liquid after storage in a solid state has a measured hue of 20 or less as APHA.

In addition, polyamide resins using xylylenediamine as a main diamine component are useful as a molding material containing a glass fiber or an inorganic filler because of their excellent mechanical performances, such as strength, elastic modulus, etc.

Patent Literature 2 discloses a xylylenediamine composition containing xylylenediamine and a predetermined amount of bis(methylbenzyl)amine, and a method for producing a polyamide resin using the composition, mentioning that the polyamide resin is suitably used as a material for packaging films, hollow containers, various molding materials, fiber, and the like.

### Citation List

### Patent Literature

PTL 1: JP 2005-154426 A
PTL 2: WO2014/178270

### Summary of Invention

### Technical Problem

Incidentally, epoxy resin compositions in which various polyamines such as xylylenediamine are employed as an epoxy resin curing agent have been widely used in the paint fields, such as a corrosion-resistant paint for ships, bridges, iron structures on land and sea, and in the civil engineering construction fields, such as lining, reinforcement, repair materials of concrete structures, floor materials of buildings, lining of water supply and sewage systems, paving materials, and adhesives.

Of these, for polyamines for paints or adhesives, it is important that paints or adhesives obtained therefrom have good water resistance, coating film appearances, and coating film physical properties, unlike polyamines for use in starting material for polyamide resin. Patent Literatures 1 and 2, however, have not contemplated performance of xylylenediamine in the case of using it as an epoxy resin curing agent for paints or adhesives, still leaving room for improvement in water resistance and the like.

An object of the present invention is to provide an epoxy resin curing agent and an epoxy resin composition with which paints or adhesive excellent in water resistance can be provided, and paints and adhesives containing these.

### Solution to Problem

The present inventors have found that the above problems can be solved by an epoxy resin curing agent containing an amine composition or a modified product thereof, wherein the amine composition contains metaxylylenediamine and paraxylylenediamine at a predetermined mass ratio.

Accordingly, the present invention relates to the following.
[1] An epoxy resin curing agent containing an amine composition or a modified product thereof, wherein the amine composition contains metaxylylenediamine and paraxylylenediamine at a mass ratio of 99/1 to 51/49.
[2] The epoxy resin curing agent according to the above [1], wherein the mass ratio between metaxylylenediamine and paraxylylenediamine in the amine composition is from 99/1 to 71/29.
[3] The epoxy resin curing agent according to the above [1] or [2], wherein the mass ratio between metaxylylenediamine and paraxylylenediamine in the amine composition is from 85/15 to 75/25.
[4] The amine composition according to any one of the above [1] to [3], wherein the total content of metaxylylenediamine and paraxylylenediamine in the amine composition is 50 mass% or more.
[5] The epoxy resin curing agent according to any one of the above [1] to [4], wherein the modified product of the amine composition is a reaction product of the amine composition and an epoxy compound having at least one epoxy group.
[6] An epoxy resin composition containing an epoxy resin and the epoxy resin curing agent according to any one of the above [1] to [5].
[7] A paint containing the epoxy resin composition according to the above [6].
[8] An adhesive containing the epoxy resin composition according to the above [6].

### Advantageous Effects of Invention

The epoxy resin curing agent and epoxy resin composition of the present invention can provide a paint or adhesive excellent in water resistance. The epoxy resin composition of the present invention is suitably used in various paints such as ship paints, heavy-duty anticorrosive paints, paints for tanks, paints for interior painting and paints for exterior painting of pipes, and paints for floor materials, and various adhesives for the civil engineering construction fields and film fields.

### Brief Description of Drawings

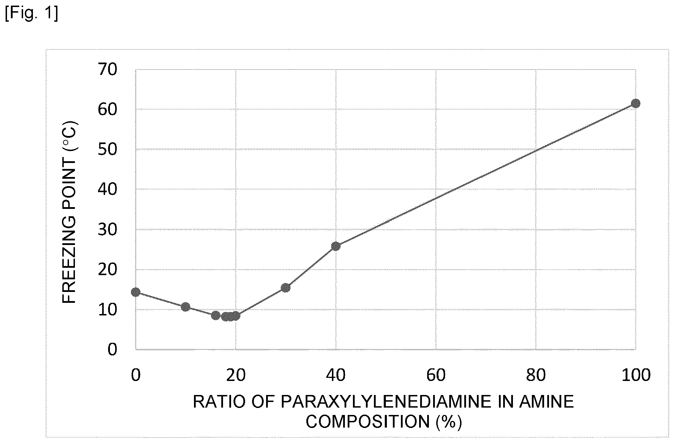

[Fig. 1] Fig. 1 is a graph showing the relationship between the mass ratio and freezing point in an amine composition consisting of metaxylylenediamine and paraxylylenediamine.

### Description of Embodiments

### [Epoxy resin curing agent]

The epoxy resin curing agent of the present invention contains an amine composition or a modified product thereof, wherein the amine composition contains metaxylylenediamine and paraxylylenediamine at a mass ratio of 99/1 to 51/49.

Use of the epoxy resin curing agent can provide a paint or adhesive excellent in water resistance. Hereinafter, the epoxy resin curing agent of the present invention is also referred to simply as "the curing agent of the present invention".

The reason why a paint or adhesive excellent in water resistance is provided by using the curing agent of the present invention is not clear, but it is believed that mixing metaxylylenediamine and paraxylylenediamine at an appropriate formulation ratio leads to a change in the three-dimensional crosslinking structure of a cured product of an epoxy resin composition to be provided to thereby cause the water resistance to be improved more than that in the case in which metaxylylenediamine or paraxylylenediamine is singly used.

Additionally, paraxylylenediamine has a high freezing point and thus leaves room for improvement in workability and preservability under low temperature conditions. However, an amine composition of which the mass ratio between metaxylylenediamine and paraxylylenediamine is within the specified range of the present invention has a low freezing point. Particularly an amine composition of which the mass ratio between metaxylylenediamine and paraxylylenediamine is in the range of 85/15 to 75/25, further in the range of 85/15 to 77/23, and 83/17 to 77/23 has a freezing point lower than that in the case of metaxylylenediamine singly. For this reason, use of the curing agent of the present invention containing the amine composition or a modified product thereof makes solidification less likely to occur under low temperature conditions, and thereby the workability under low temperature conditions is more improved, in addition to improvement in the water resistance.

The mass ratio between metaxylylenediamine and paraxylylenediamine (metaxylylenediamine/paraxylylenediamine) in the amine composition to be used in the present invention is from 99/1 to 51/49 and more preferably from 99/1 to 71/29 from the viewpoint of providing a paint or adhesive excellent in water resistance. From the viewpoint of providing a paint or adhesive excellent in water resistance and from the viewpoint of improvement in workability under low temperature conditions, the mass ratio is more preferably 85/15 to 75/25, further preferably 85/15 to 77/23, and still further preferably 83/17 to 77/23.

The total content of metaxylylenediamine and paraxylylenediamine in the amine composition is preferably 50 mass% or more, more preferably 60 mass% or more, further preferably 70 mass% or more, still further preferably 80 mass% or more, still further preferably 90 mass% or more, still further preferably 95 mass% or more, and may be 100 mass% from the viewpoint of providing a paint or adhesive excellent in water resistance.

A method for preparing the amine composition is not particularly limited, and can be prepared, for example, by formulating and mixing metaxylylenediamine and paraxylylenediamine each in a predetermined amount. If it is possible to adjust a catalyst to be used and production conditions and conduct a reaction for generating metaxylylenediamine and paraxylylenediamine at a predetermined ratio in parallel, a method using this is also exemplified. In this case, the contents and ratios of metaxylylenediamine and paraxylylenediamine in the amine composition can be determined by gas chromatography analysis or the like.

Specific examples of a modified product of the amine composition included in the curing agent of the present invention include reaction products provided by reacting the amine composition, an epoxy compound having at least one epoxy group, an unsaturated hydrocarbon compound, a carboxylic acid or a derivative thereof, and the like; and Mannich reaction products provided by reacting the amine composition, a phenol compound, and an aldehyde compound.

Of these, a modified product of the amine composition is preferably a reaction product of the amine composition and an epoxy compound having at least one epoxy group from the viewpoint of providing a paint or adhesive excellent in water resistance. Hereinafter, the reaction product is also referred to simply as "the reaction product".

The epoxy compound for use in the reaction product of the amine composition and an epoxy compound having at least one epoxy group may be a compound having at least one epoxy group, and a compound having 2 or more epoxy groups is more preferred.

Specific examples of the epoxy compound include epichlorohydrin, butyl diglycidyl ether, neopentyl glycol diglycidyl ether, 1,3-propanediol diglycidyl ether, 1,4-butanediol diglycidyl ether, 1,6-hexanediol diglycidyl ether, biphenol diglycidyl ether, dihydroxynaphthalene diglycidyl ether, dihydroxyanthracene diglycidyl ether, triglycidyl isocyanurate, tetraglycidyl glycoluril, polyfunctional epoxy resins having a glycidylamino group derived from m-xylylenediamine, polyfunctional epoxy resins having a glycidylamino group derived from 1,3-bis(aminomethyl)cyclohexane, polyfunctional epoxy resins having a glycidylamino group derived from diaminodiphenylmethane, polyfunctional epoxy resins having a glycidylamino group derived from p-aminophenol, polyfunctional epoxy resins having a glycidyloxy group derived from p-aminophenol, polyfunctional epoxy resins having a glycidyloxy group derived from bisphenol A, polyfunctional epoxy resins having a glycidyloxy group derived from bisphenol F, polyfunctional epoxy resins having a glycidyloxy group derived from phenol novolac, and polyfunctional epoxy resins having 2 or more glycidyloxy groups derived from resorcinol. These can be used singly or in combinations of two or more thereof.

The epoxy compound is more preferably a compound including an aromatic ring or an alicyclic structure in the molecule, further preferably a compound including an aromatic ring in the molecule, and still further preferably a polyfunctional epoxy resin having a glycidyloxy group derived from bisphenol A from the viewpoint of forming an epoxy resin cured product excellent in water resistance and from the viewpoint of curing.

A reaction product is provided by ring-opening addition reacting an amine composition and an epoxy compound in a known manner. In an exemplary method, a reactor is charged with the amine composition, the epoxy compound is added batchwise or added in portions by dropwise addition or the like thereto and subjected to a reaction by heating. The addition reaction is preferably conducted under an inert atmosphere such as nitrogen gas.

The amount of the amine composition and epoxy compound to be used is not particularly limited as long as a ratio is achieved at which a reaction product to be provided contains an amino group having active hydrogen. In the addition reaction, an excess of the amine composition is preferably used relative to the epoxy equivalent of the epoxy compound from the viewpoint that a reaction product to be provided exhibits a function as an epoxy resin curing agent. Specifically, the amine composition and the epoxy compound are used such that the number of active hydrogen atoms in the amine composition to the number of epoxy groups in epoxy compound (number of active hydrogen atoms in amine composition/number of epoxy groups in epoxy compound) is preferably 50/1 to 4/1 and more preferably 20/1 to 8/1.

The temperature and reaction time during the addition reaction can be appropriately selected. From the viewpoint of the reaction rate, productivity, prevention of decomposition of the starting material, and the like, the temperature during the addition reaction is preferably from 50 to 150°C and more preferably from 70 to 120°C. The reaction time is preferably from 0.5 to 12 hours and more preferably from 1 to 6 hours after addition of the epoxy compound is completed.

The curing agent of the present invention may be a curing agent consisting of the amine composition or a modified product thereof and may also contain other curing agent components. The curing agent component means a component having 2 or more functional group that may react with epoxy groups in the epoxy resin contained in the curing agent, and examples of other curing agent components include polyamine compounds other than the amine composition and modified products thereof.

The content of the amine composition and a modified product thereof in the curing agent of the present invention is, however, relative to the entire curing agent components in the curing agent, preferably 50 mass% or more, more preferably 60 mass% or more, further preferably 70 mass% or more, still further preferably 80 mass% or more, still further preferably 90 mass% or more, still further preferably 95 mass% or more, and may be 100 mass%, from the viewpoint of a paint or adhesive excellent in water resistance.

A well-known curing accelerator, a non-reactive diluent such as benzyl alcohol, or the like may also be formulated with the curing agent of the present invention, within a range not impairing the effects of the present invention.

When the curing agent of the present invention includes a modified product of the amine composition, the active hydrogen equivalent of the curing agent is preferably 85 or more and more preferably 90 or more from the viewpoint of providing a paint or adhesive excellent in water resistance, and is preferably 120 or less and more preferably 110 or less from the viewpoint of improvement in curing.

The active hydrogen equivalent weight (hereinafter, also referred to as "AHEW") is the mass of the epoxy resin curing agent per mol of active hydrogen. When the curing agent of the present invention uses the non-reactive diluent, the AHEW of the total amount of the curing agent solution including the diluent is preferably in the range described above.

### [Epoxy resin composition]

The epoxy resin composition of the present invention contains an epoxy resin and the epoxy resin curing agent. The epoxy resin composition of the present invention has high water resistance and is suitably used in paints or adhesives.

### <Epoxy resin>

The epoxy resin as the main agent of the epoxy resin composition may be any of saturated or unsaturated aliphatic compounds or alicyclic compounds, aromatic compounds, and heterocyclic compounds. From the viewpoint of providing a cured product having high water resistance, an epoxy resin including an aromatic ring or an alicyclic structure in the molecule is preferred.

Specific examples of the epoxy resin include at least one resin selected from the group consisting of epoxy resins having a glycidylamino group derived from m-xylylenediamine, epoxy resins having a glycidylamino group derived from p-xylylenediamine, epoxy resins having a glycidylamino group derived from 1,3-bis(aminomethyl)cyclohexane, epoxy resins having a glycidylamino group derived from 1,4-bis(aminomethyl)cyclohexane, epoxy resins having a glycidylamino group derived from diaminodiphenylmethane, epoxy resins having a glycidylamino group and/or a glycidyloxy group derived from p-aminophenol, epoxy resins having a glycidyloxy group derived from bisphenol A, epoxy resins having a glycidyloxy group derived from bisphenol F, epoxy resins having a glycidyloxy group derived from phenol novolac, and epoxy resin having a glycidyloxy group derived from resorcinol. The epoxy resins described above may be used in mixture of two or more thereof.

Of those described above, from the viewpoint of providing a cured product having high water resistance, as the epoxy resin, ones including, as the main component, at least one selected from the group consisting of epoxy resins having a glycidylamino group derived from m-xylylenediamine, epoxy resins having a glycidylamino group derived from p-xylylenediamine, epoxy resins having a glycidyloxy group derived from bisphenol A, and epoxy resins having a glycidyloxy group derived from bisphenol F are preferred. From the viewpoint of providing a cured product having high water resistance and from the viewpoint of availability and cost efficiency, ones including, as the main component, an epoxy resin having a glycidyloxy group derived from bisphenol A are more preferred.

The "main component" referred to herein means that other components may be included without departing from the gist of the present invention, meaning preferably from 50 to 100 mass%, more preferably from 70 to 100 mass%, and further preferably from 90 to 100 mass% of the total.

The content of the epoxy resin curing agent in the epoxy resin composition of the present invention is an amount at which the ratio of the number of active hydrogen atoms in the epoxy resin curing agent to the number of epoxy groups in the epoxy resin (number of active hydrogen atoms in epoxy resin curing agent/number of epoxy groups in epoxy resin) is preferably from 1/0.5 to 1/2, more preferably from 1/0.75 to 1/1.5, and further preferably from 1/0.8 to 1/1.2.

The epoxy resin composition of the present invention may also contains a modifying component such as a filler and a plasticizer, a component for adjusting flowability such as a thixotropic agent, and other components such as a pigment, a leveling agent, a tackifier and elastomer fine particles depending on the use.

However, the total content of the epoxy resin and the epoxy resin curing agent in the epoxy resin composition is preferably 50 mass% or more, more preferably 70 mass% or more, further preferably 80 mass% or more, and still further preferably 90 mass% or more, and still further preferably 95 mass% or more, and may be 100 mass% from the viewpoint of achieving the effects of the present invention.

The method for preparing the epoxy resin composition of the present invention is not particularly limited, and the composition may be produced by mixing the epoxy resin, the epoxy resin curing agent, and other components as required by a known method using a known apparatus. The order of mixing the components to be contained in the epoxy resin composition is not particularly limited. The epoxy resin curing agent may be prepared and then mixed with an epoxy resin, and preparation may be conducted by simultaneously mixing the components constituting the epoxy resin curing agent and other components, and the epoxy resin.

### [Paint, adhesive]

The present invention provides paints and adhesives containing the epoxy resin composition. Paints and adhesives of the present invention will have high water resistance by containing the epoxy resin composition.

Paints and adhesives containing the epoxy resin composition of the present invention have a low freezing point by containing the epoxy resin curing agent of the present invention. Accordingly, there can be provided paints and adhesives having high workability under low temperature conditions and high water resistance.

The content of the epoxy resin composition in the paints and adhesives is preferably 50 mass% or more, more preferably 70 mass% or more, further preferably 80 mass% or more, still further preferably 90 mass% or more, still further preferably 95 mass% or more and may be 100 mass% from the viewpoint of improvement in water resistance.

Examples of the paint include ship paints, heavy-duty anticorrosive paints, paints for tanks, paints for interior painting and paints for exterior painting of pipes, and paints for floor materials. Examples of the adhesive include various adhesive for the civil engineering construction fields and film fields.

### Examples

Hereinafter, the present invention will be described in more detail with reference to Examples and Comparative Examples, but the present invention is not limited to the following Examples. Various measurements and evaluations in each Example were carried out in the following manners.

### (Dry to the touch)

A zinc phosphate-treated iron plate (manufactured by PALTECH Co., Ltd.; SPCC-SD PB-N144 0.8 × 70 × 150 mm) was used as a base material. Under conditions of 23°C and 50% R.H., an epoxy resin composition of each example was applied using an applicator onto the base material to form a coating film (thickness immediately after application: 200 µm). This coating film was kept under the conditions of 23°C and 50% R.H., and after 1 day passed, was evaluated by finger contact based on the following criteria. The results are shown in Table 1.
Ex: Excellent (there is no sticking of the coating film even when the thumb is pressed with a force of about 50 N, and no fingerprints remain)
G: Good (there is no sticking of the coating film even when the thumb is pressed with a force of about 50 N, but fingerprints remain after finger contact)
F: Fair (there is sticking of the coating film when the thumb is pressed with a force of about 50 N)
P: Poor (there is sticking of the coating film when the thumb is pressed with a force of about 5 N)

### (Pencil hardness)

A coating film was formed (thickness immediately after application: 200 µm) by applying an epoxy resin composition on a base material (zinc phosphate-treated iron plate) in the same manner as described above. This coating film was kept under the conditions of 23°C and 50% R.H., and after 1, 2, and 7 days passed, the pencil hardness was measured in accordance with JIS K5600-5-4:1999. The results are shown in Table 1.

### (Water resistance spot test)

A coating film was formed (thickness immediately after application: 200 µm) by applying an epoxy resin composition on a base material (zinc phosphate-treated iron plate) in the same manner as described above. This coating film was kept under the conditions of 23°C and 50% R.H., and after 1, 2, and 7 days passed, 2 to 3 drops of pure water were dropped on the surface of the coating film with a dropper, and the portion was covered with a 50 mL screw tube bottle. After 24 hours passed, water was wiped off, and the appearance was observed visually and evaluated according to the following criteria. The results are shown in Table 1.
Ex: No change at all
G: Slight changes existed, but good
F: Changes existed

### (RCI curing rate)

The epoxy resin composition in each example was applied onto a glass plate (manufactured by Taiyu Machinery Co., Ltd., 25 × 348 × 2.0 mm) under the conditions of 23°C and 50% R.H., by using an applicator of 76 µm, thereby forming a coating film. The glass plate on which the coating film was formed was set on a paint drying time measuring instrument (manufactured by Taiyu Machinery Co., Ltd.), the striations when the needle of the measuring instrument scratched the surface of the coating film were observed, and the time to reach each drying step (Set to Touch, Dust Free, and Dry Through) was measured based on the following criteria. The results are shown in Table 1. A shorter time indicates a higher curing rate.
Set to Touch: time taken until when traces of the needle start to remain on the glass plate
Dust Free: time taken until when traces of the needle emerges from the middle of the coating film onto the surface of the coating film
Dry Through: time taken until when no traces of the needle remain on the coating film

### (Appearance of coating film)

A coating film was formed (thickness immediately after application: 200 µm) by applying an epoxy resin composition on a base material (zinc phosphate-treated iron plate) in the same manner as described above. The appearance of the obtained coating film after 1 day passed was observed visually to evaluate transparency, smoothness, and glossiness based on the following criteria.

### <Transp arency>

Ex: No turbidity existed
G: Slight turbidity existed, but no problem with use
F: White turbidity existed

### <Smoothness>

Ex: No unevenness existed
G: Slight unevenness existed, but no problem with use
F: Unevenness existed

### <Glossiness>

Ex: Glossiness existed
G: Slight deterioration in glossiness existed, but no problem with use
F: No glossiness existed

### Example 1 (Preparation and evaluation of epoxy resin curing agent, and epoxy resin composition(paint))

### [Preparation of amine composition]

Metaxylylenediamine (MXDA, manufactured by Mitsubishi Gas Chemical Company, Inc.) and paraxylylenediamine (PXDA, manufactured by Mitsubishi Gas Chemical Company, Inc.) were formulated and mixed at a mass ratio of 90/10 to prepare an amine composition.

### [Preparation of epoxy resin curing agent]

340 g of the amine composition was loaded in a separable flask having an inner volume of 1 liter and equipped with a stirrer, a thermometer, a nitrogen inlet tube, a dropping funnel, and a condenser, and the temperature was raised to 80°C with stirring under a nitrogen stream. With the temperature kept at 80°C, 186 g (an amount at which number of active hydrogen atoms in amine composition/number of epoxy groups in epoxy compound = 10/1 is achieved) of a polyfunctional epoxy resin having glycidyloxy groups derived from bisphenol A ("jER828" manufactured by Mitsubishi Chemical Corporation, epoxy equivalent: 186 g/equivalent) as an epoxy compound was added dropwise over 2 hours. After the dropwise addition was completed, the temperature was raised to 100°C, a reaction was conducted for 2 hours, and a reaction product of the amine composition and jER828 was provided. Benzyl alcohol, an unreactive diluent, was added thereto for dilution in an amount of 40 mass% relative to the total amount, and an epoxy resin curing agent in which the concentration of the reaction product was 60 mass% was provided. The active hydrogen equivalent weight (AHEW) of the epoxy resin curing agent (the total amount including benzyl alcohol) was 97.4.

### [Preparation of epoxy resin composition (paint)]

As the epoxy resin as the main agent of the epoxy resin composition, a polyfunctional epoxy resin having glycidyloxy groups derived from bisphenol A ("jER828" manufactured by Mitsubishi Chemical Corporation, epoxy equivalent: 186 g/equivalent) was used. The epoxy resin and the epoxy resin curing agent were formulated and mixed such that the ratio of the number of active hydrogen atoms in the epoxy resin curing agent to the number of epoxy groups in the epoxy resin as the main agent (number of active hydrogen atoms in the epoxy resin curing agent/number of epoxy groups in the main agent epoxy resin) reached 1/1 to prepare an epoxy resin composition (paint).

The resulting epoxy resin composition was used to conduct various evaluations. The results are shown in Table 1.

### Examples 2 to 6 and Comparative Examples 1 to 3

An amine composition was prepared by formulating metaxylylenediamine and paraxylylenediamine in mass ratio shown in Table 1. This amine composition was used to prepare an epoxy resin curing agent and an epoxy resin composition and conduct various evaluations in the same manner as in Example 1. The results are shown in Table 1.

**Table 1**

| | | | | Example | | | | | | Comparative Example | | |
|---|---|---|---|---|---|---|---|---|---|---|---|---|
| | | | | 1 | 2 | 3 | 4 | 5 | 6 | 1 | 2 | 3 |
| Epoxy resin composition | Main agent epoxy resin | | | jER828 | | | | | | jER828 | | |
| | Epoxy resin curing agent (reaction product) | MXDA/PXDA in amine composition used (mass ratio) | | 90/10 | 85/15 | 80/20 | 75/25 | 70/30 | 60/40 | 50/50 | 100/0 | 0/100 |
| | | Number of active hydrogen atoms in amine composition/number of epoxy groups in epoxy compound | | 10/1 | 10/1 | 10/1 | 10/1 | 10/1 | 10/1 | 10/1 | 10/1 | 10/1 |
| | | AHEW | | 97.4 | 97.4 | 97.4 | 97.4 | 97.4 | 97.4 | 97.4 | 97.4 | 97.4 |
| | Number of active hydrogen atoms in curing agent/number of epoxy groups in main agent epoxy resin | | | 1/1 | | | | | | 1/1 | | |
| Evaluation results | Dry to the touch (1d) | | | Ex | Ex | Ex | Ex | Ex | Ex | Ex | Ex | Ex |
| | Pencil hardness (1d/2d/7d) | | | H/H/H | H/H/H | H/H/H | H/H/H | H/H/H | H/H/H | H/H/H | H/H/H | H/H/H |
| | Water resistance spot (1d/2d/7d) | | | G/G/G | Ex/G/G | Ex/Ex/Ex | Ex/G/G | Ex/G/G | G/G/G | F/F/F | F/F/F | F/F/F |
| | RCI curing time (minute:second) | | Set to Touch | 1:30 | 1:15 | 145 | 1:30 | 1:45 | 1:30 | 2:00 | 1:30 | 1:30 |
| | | | Dust Free | 3:00 | 2:15 | 2:45 | 2:15 | 245 | 2:30 | 2:30 | 2:30 | 2:15 |
| | | | Dry Through | 4:00 | 3:30 | 4:00 | 3:00 | 3:30 | 2:30 | 3:00 | 3:15 | 3:00 |
| | Appearance | | Transparency | Ex | Ex | Ex | Ex | Ex | Ex | F | Ex | Ex |
| | | | Smoothness | F | F | F | F | F | F | Ex | G | Ex |
| | | | Glossiness | Ex | Ex | Ex | Ex | Ex | Ex | G | Ex | Ex |

It can be seen from Table 1 that the epoxy resin compositions containing the epoxy resin curing agent of the present invention is more excellent in water resistance than the epoxy resin composition of Comparative Examples 1 to 3. The curing rate and coating film performance such as hardness, appearance, and the like of the coating film are at a level with no problem with practical use.

Fig. 1 is a graph showing the relationship between the mass ratio and freezing point in an amine composition consisting of metaxylylenediamine and paraxylylenediamine. As shown in Fig. 1, it can be seen that the freezing point lowers a mass ratio between metaxylylenediamine and paraxylylenediamine (metaxylylenediamine/paraxylylenediamine) around 80/20 in comparison with cases of metaxylylenediamine singly and paraxylylenediamine singly.

The freezing point of the amine composition was measured by the following method.

### [Measurement of freezing point]

Measurement was carried out in accordance with JIS K0065-1992 "Test method for freezing point of chemical products".

A sample was placed in a test tube up to the mark, and a silicon plug in which a thermometer and a stirring bar had been installed was attached to the test tube. A large test tube was further attached as the jacket of the test tube. This was placed in a bath including cryogen and cooled with stirring. Used was water cooled with ice water/sodium chloride as the cryogen or with Coolnics. While the sample began to solidify, the reading of the thermometer began to increase. The temperature at which the reading became constant was defined as the freezing point. When the temperature did not become constant and the reading began to decrease, a point obtained by extrapolating a straight line immediately after the maximum reading was indicated from the cooling curve was defined as the freezing point. The measurement was conducted 3 times, and the average value thereof was determined.

### Industrial Applicability

The epoxy resin curing agent and epoxy resin composition of the present invention can provide a paint or adhesive excellent in water resistance. The epoxy resin composition of the present invention is suitably used in various paints such as ship paints, heavy-duty anticorrosive paints, paints for tanks, paints for interior painting and paints for exterior painting of pipes, and paints for floor materials, and various adhesives for the civil engineering construction fields and film fields.

## Claims

1. An epoxy resin curing agent comprising an amine composition or a modified product thereof,
wherein the amine composition comprises metaxylylenediamine and paraxylylenediamine at a mass ratio of 99/1 to 51/49.

2. The epoxy resin curing agent according to claim 1, wherein the mass ratio between metaxylylenediamine and paraxylylenediamine in the amine composition is from 99/1 to 71/29.

3. The epoxy resin curing agent according to claim 1 or 2, wherein the mass ratio between metaxylylenediamine and paraxylylenediamine in the amine composition is from 85/15 to 75/25.

4. The epoxy resin curing agent according to any one of claims 1 to 3, wherein the total content of metaxylylenediamine and paraxylylenediamine in the amine composition is 50 mass% or more.

5. The epoxy resin curing agent according to any one of claims 1 to 4, wherein the modified product of the amine composition is a reaction product of the amine composition and an epoxy compound having at least one epoxy group.

6. An epoxy resin composition comprising an epoxy resin and the epoxy resin curing agent according to any one of claims 1 to 5.

7. A paint comprising the epoxy resin composition according to claim 6.

8. An adhesive comprising the epoxy resin composition according to claim 6.
